# FASCICULE DE BREVET EUROPEEN

(11) **EP 2 872 006 B1**
(45) Date de publication et mention de la délivrance du brevet: **29.06.2016**
(21) Numéro de dépôt: 13744706.6
(22) Date de dépôt: 05.07.2013
(51) Int. Cl.: B60N 2/20, B60N 2/22, B60N 2/225, B60N 2/235

(54) **ENSEMBLE D'ARTICULATION DEBRAYABLE POUR SIEGE DE VEHICULE AUTOMOBILE**
ENTKUPPELBARE GELENKANORDNUNG FÜR EINEN KRAFTFAHRZEUGSITZ
DISENGAGEABLE ARTICULATION ASSEMBLY FOR MOTOR VEHICLE SEAT

(30) Priorité: 12.07.2012 FR 1256709
(43) Date de publication de la demande: 20.05.2015
(73) Titulaire: Peugeot Citroën Automobiles SA, 78140 Vélizy Villacoublay (FR)
(72) Inventeur: HAYAT, David, 78770 Auteuil (FR); PINTO TEIXEIRA, Frederic, 91160 Ballainvilliers (FR)
(74) Mandataire: Jeannin, Laurent Jean-Pierre
(86) Numéro de dépôt international: PCT/FR2013/051613
(87) Numéro de publication internationale: WO 2014/009642

(56) Documents cités:
- FR-A1- 2 444 427
- FR-A1- 2 590 211
- FR-A1- 2 923 425
- US-A1- 2007 137 965
- US-A1- 2012 279 819

## Description

La présente invention concerne un ensemble d'articulation pour siège de véhicule automobile comprenant un premier élément et un deuxième élément articulés dans un premier mode de fonctionnement en rotation l'un par rapport à l'autre autour d'un axe de rotation, un dispositif de commande d'entraînement pour régler la position relative entre le premier élément et le deuxième élément en rotation autour de l'axe de rotation et une bague qui maintient ensemble le premier élément, le deuxième élément et le dispositif de commande d'entraînement de manière à former un module de réglage fin de l'inclinaison du dossier du siège.

Un tel ensemble d'articulation, dite articulation continue, est connu, par exemple, de la demande de brevet français FR 2 923 425 A1.

Cet ensemble d'articulation fonctionne bien pour le réglage fin de l'inclinaison du dossier d'un siège, mais il ne permet pas d'atteindre rapidement une position du dossier du siège, par exemple pour donner accès aux places arrières du véhicule.

Il est donc souhaitable de prévoir un système d'articulation qui puisse fonctionner en deux modes, un premier mode connu de réglage fin du dossier et un deuxième mode permettant d'atteindre rapidement une position déterminée du dossier.

Il a été déjà proposé, par exemple dans la demande de brevet GB 2 218 627 A1, de prévoir la possibilité de débrayer des éléments d'un ensemble d'articulation pour réaliser deux modes de fonctionnement distincts. La demande de brevet citée ci-dessus concerne une articulation à mémoire, par le biais d'un système à crabot, débrayable par un système de renvoi à bielle qui est commandé à l'extérieur de cette articulation. Cet ensemble d'articulation est complexe et encombrant.

C'est le but de la présente invention de proposer un ensemble d'articulation pour siège de véhicule automobile qui puisse fonctionner dans un premier mode de réglage fin de l'inclinaison du dossier du siège et en cas de nécessité dans un deuxième mode de fonctionnement rapide qui permette d'atteindre rapidement des positions déterminées du dossier de siège pour accéder aux places arrières d'un véhicule, par exemple ou bien pour composer une tablette ou une couchette, etc. Cet ensemble d'articulation doit être peu encombrant et facile à réaliser.

C'est l'objet de la présente invention de proposer un ensemble d'articulation pour siège de véhicule automobile comprenant un premier élément et un deuxième élément articulés dans un premier mode de fonctionnement en rotation l'un par rapport à l'autre autour d'un axe de rotation, un dispositif de commande d'entraînement pour régler la position relative entre le premier élément et le deuxième élément en rotation autour de l'axe de rotation et une bague qui maintient ensemble le premier élément, le deuxième élément et le dispositif de commande d'entraînement de manière à former un module de réglage fin de l'inclinaison du dossier du siège, caractérisé en ce que entre le premier élément et la bague de maintien est intercalée une commande de déverrouillage pour assurer un deuxième mode de fonctionnement comprenant un doigt de débrayage guidé en rotation pour séparer le premier élément d'un disque de débrayage, le disque de débrayage étant poussé axialement vers le premier élément grâce à l'action d'un ressort qui prend appui contre une coupelle maintenue par la bague.

Selon un mode de réalisation préféré, le doigt de débrayage comprend une partie en forme de disque annulaire portant des cames mâles coopérant avec des empreintes femelles pratiquées dans le disque de débrayage assurant l'écartement axial du disque de débrayage et du premier élément.

Selon un mode de réalisation préféré, les surfaces du disque de débrayage et du premier élément qui se trouvent en position face à face comportent des structures complémentaires d'accouplement assurant une prise directe.

Avantageusement, le ressort présente la forme d'une rondelle ondulée logée dans une rainure circulaire usinée dans la coupelle d'appui.

D'autres caractéristiques et avantages de la présente invention apparaîtront dans la description détaillée suivante, se référant aux dessins annexés, dans lesquels :
- Fig. 1: est une vue éclatée des éléments constitutifs d'un ensemble d'articulation selon l'invention;
- Fig. 2: est une coupe transversale d'un ensemble d'articulation selon l'invention à l'état embrayé;
- Fig. 3: montre l'ensemble d'articulation selon Fig. 2 à l'état débrayé.

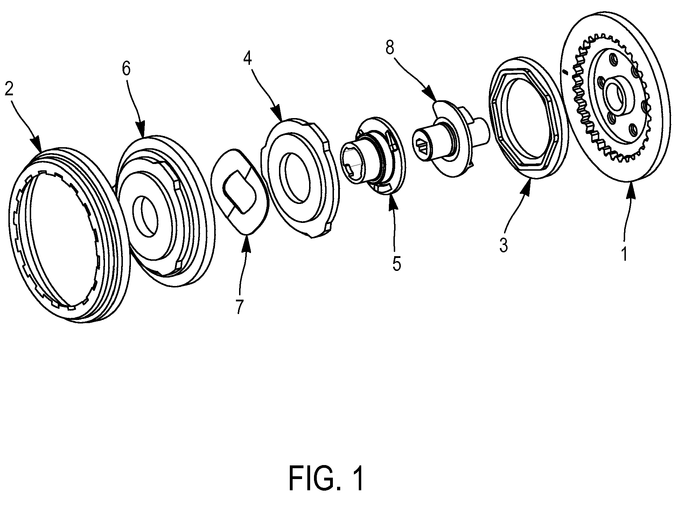

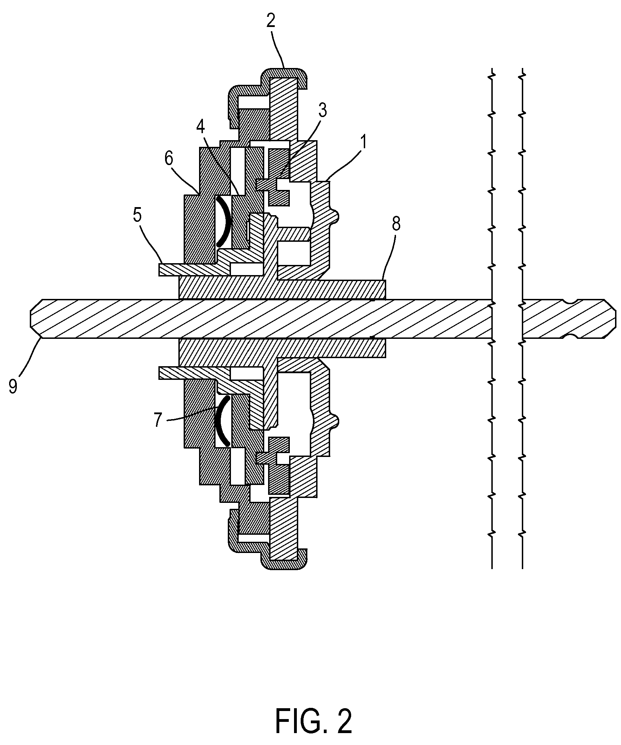

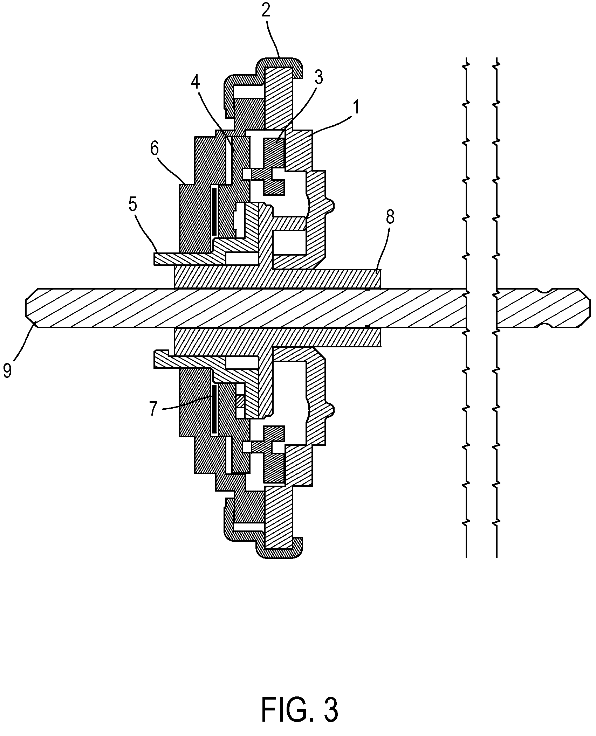

Fig. 1 montre une vue éclatée des éléments constitutifs d'un mode de réalisation d'un ensemble d'articulation pour siège de véhicule selon l'invention. De droite à gauche sont représentés: un deuxième élément 1 et un premier élément 3 articulés en rotation l'un par rapport à l'autre autour d'un axe 9 représenté sur Fig. 2 et Fig. 3. Un dispositif de commande d'entraînement 8 asymétrique pour régler la position relative entre le premier élément 3 et le deuxième élément 1 en rotation autour de l'axe. Un doigt de débrayage 5 avec des cames est agencé sur un disque annulaire, qui coopère avec des empreintes dans un disque de débrayage 4 pour séparer le premier élément 3 du disque de débrayage 4.

Un ressort 7 en forme de rondelle ondulée est logé dans une rainure circulaire usinée dans une coupelle d'appui 6.

Une bague 2 maintient le premier élément 3, le deuxième élément 1 et le dispositif de commande d'entraînement 8 ainsi que les éléments de débrayage 7, 4, 5.

Fig. 2 montre une coupe transversale d'un mode de réalisation d'un ensemble d'articulation selon l'invention. En Fig. 2, l'ensemble d'articulation est embrayé, c'est-à-dire que les cames mâles du doigt de débrayage 5 coïncident avec les empreintes femelles du disque de débrayage 4. Egalement les strucures complémentaires d'accouplement du premier élément 3 et du disque de débrayage 4 sont en prise les unes dans les autres. Le ressort 7 appuie le disque de débrayage 4 contre l'élément 3.

Quand le doigt de débrayage 5 est mis en rotation, ces cames mâles sortent des empreintes usinées dans le disque de débrayage 4 et écartent ainsi, malgré la pression du ressort 7, le premier élément 3 et le disque de débrayage 4.

Dans une telle position, comme représentée en Fig. 3, la coupelle d'appui 6 est alors déverrouillée du premier élément 3 et peut être mise en rotation permettant un mouvement rapide du dossier du siège.

En lâchant le doigt de débrayage 5 à la fin de ce mouvement du dossier, ledit dossier va prendre une position où les cames seront insérées à nouveau dans les empreintes du disque de débrayage 4 et l'ensemble d'articulation sera de nouveau embrayé.

## Revendications

1. Ensemble d'articulation pour siège de véhicule automobile comprenant:
- un premier élément (3) et un deuxième élément (1) articulés dans un premier mode de fonctionnement en rotation l'un par rapport à l'autre autour d'un axe de rotation (9),
- un dispositif de commande d'entraînement (8) pour régler la position relative entre le premier élément et le deuxième élément en rotation autour de l'axe de rotation (9) et
- une bague (2) qui maintient ensemble le premier élément (3), le deuxième élément (1) et le dispositif de commande d'entraînement (8) de manière à former un module de réglage fin de l'inclinaison du dossier du siège, **caractérisé en ce que** entre le premier élément (3) et la bague de maintien (2) est intercalée une commande de déverrouillage pour assurer un deuxième mode de fonctionnement rapide comprenant un doigt de débrayage (5) guidé en rotation pour séparer le premier élément (3) d'un disque de débrayage (4), le disque de débrayage (4) étant poussé axialement vers le premier élément (3) grâce à l'action d'un ressort (7) qui prend appui contre une coupelle (6) maintenue par la bague (2).

2. Ensemble d'articulation selon la revendication 1, **caractérisé en ce que** le doigt de débrayage (5) comprend une partie en forme de disque annulaire portant des cames mâles coopérant avec des empreintes femelles pratiquées dans le disque de débrayage (4) assurant l'écartement axial du disque de débrayage (4) et du premier élément (3).

3. Ensemble d'articulation selon la revendication 1 ou 2, **caractérisé en ce que** les surfaces du disque de débrayage (4) et du premier élément (3) qui se trouvent en position face à face comportent des structures complémentaires d'accouplement assurant une prise directe.

4. Ensemble d'articulation selon l'une quelconque des revendications 1 à 3, **caractérisé en ce que** le ressort (7) présente la forme d'une rondelle ondulée logée dans une rainure circulaire usinée dans la coupelle d'appui (6).
La présente invention concerne un ensemble d'articulation pour siège de véhicule automobile comprenant un premier élément (3) et un deuxième élément (1) articulés dans un premier mode en rotation l'un par rapport à l'autre autour d'un axe de rotation, un dispositif de commande d'entraînement (8) pour régler la position relative entre le premier élément et le deuxième élément en rotation autour de l'axe de rotation (9) et une bague (2) qui maintient ensemble le premier élément (3), le deuxième élément (1) et le dispositif de commande d'entraînement (8) de manière à former un module de réglage fin de l'inclinaison du dossier du siège, dans lequel entre le premier élément (3) et la bague de maintien (2) est intercalée une commande de déverrouillage pour assurer un deuxième mode de fonctionnement comprenant un doigt de débrayage (5) guidé en rotation pour séparer le premier élément (3) d'un disque de débrayage (4), le disque de débrayage (4) étant poussé axialement vers le premier élément (3) grâce à l'action d'un ressort (7) qui prend appui contre une coupelle (6) maintenue par la bague (2).

## Patentansprüche

1. Gelenkanordnung für Kraftfahrzeugsitz, die Folgendes umfasst:
- ein erstes Element (3) und ein zweites Element (1), die in einem ersten Betriebsmodus in Drehung zueinander um eine Rotationsachse (9) angelenkt sind,
- eine Antriebssteuervorrichtung (8), zum Regeln der relativen Position zwischen dem ersten Element und dem zweiten Element in Drehung um die Rotationsachse (9), und
- einen Ring (2), der das erste Element (3), das zweite Element (1) und die Antriebssteuervorrichtung (8) derart zusammenhält, dass ein Modul zur Feineinstellung der Neigung der Rückenlehne des Sitzes gebildet wird, **dadurch gekennzeichnet, dass** zwischen das erste Element (3) und den Haltering (2) eine Entriegelungssteuerung eingefügt ist, um einen zweiten Schnellbetriebsmodus sicherzustellen, die einen Auskuppelfinger (5) umfasst, der in Drehung geführt ist, um das erste Element (3) von einer Auskuppelscheibe (4) zu trennen, wobei die Auskuppelscheibe (4) axial zu dem ersten Element (3) dank der Wirkung einer Feder (7) gedrückt wird, die gegen eine Schale (6) anliegt, die von dem Ring (2) gehalten wird.

2. Gelenkanordnung nach Anspruch 1, **dadurch gekennzeichnet, dass** der Auskuppelfinger (5) einen Teil in Ringscheibenform umfasst, der Einfügenocken trägt, die mit Aufnahmeabdrücken zusammenwirken, die in der Auskuppelscheibe (4) eingerichtet sind, die das axiale Beabstanden der Auskuppelscheibe (4) von dem ersten Element (3) sicherstellen.

3. Gelenkanordnung nach Anspruch 1 oder 2, **dadurch gekennzeichnet, dass** die Oberflächen der Auskuppelscheibe (4) und des ersten Elements (3), die in Gegenüberstellung sind, komplementäre Kupplungsstrukturen umfassen, die ein direktes Eingreifen sicherstellen.

4. Gelenkanordnung nach einem der Ansprüche 1 bis 3, **dadurch gekennzeichnet, dass** die Feder (7) die Form eines Wellfederrings aufweist, der in einer kreisförmigen Nut, die in die Auflageschale (6) gearbeitet ist, aufgenommen ist.

## Claims

1. An articulation assembly for a motor vehicle seat including:
- a first element (3) and a second element (1) that are articulated in a first operating mode in rotation with respect to one another about a rotation axis (9),
- a drive control device (8) for adjusting the relative position between the first element and the second element in rotation about the rotation axis (9) and
- a ring (2) which holds the first element (3), the second element (1) and the drive control device (8) together so as to form a fine-adjustment module for the inclination of the backrest of the seat, **characterized in that**, between the first element (3) and the holding ring (2) there is interposed an unlocking control means for ensuring a second rapid operating mode, including a disengagement finger (5) which is guided in rotation in order to separate the first element (3) from a disengagement disc (4), the disengagement disc (4) being pushed axially towards the first element (3) under the action of a spring (7) which bears against a cup (6) held by the ring (2).

2. The articulation assembly according to Claim 1, **characterized in that** the disengagement finger (5) includes a part in the form of an annular disc carrying male cams cooperating with female recesses formed in the disengagement disc (4), ensuring the axial spacing of the disengagement disc (4) and of the first element (3).

3. The articulation assembly according to Claim 1 or 2, **characterized in that** the surfaces of the disengagement disc (4) and of the first element (3) which are situated in a face to face position comprise complementary coupling structures ensuring a direct hold.

4. The articulation assembly according to any one of Claims 1 to 3, **characterized in that** the spring (7) has the shape of a wave washer housed in a circular groove machined in the support cup (6).
